# FASCICULE DE BREVET EUROPEEN

(11) **EP 3 850 256 B1**
(45) Date de publication et mention de la délivrance du brevet: **08.06.2022**
(21) Numéro de dépôt: 19794175.0
(22) Date de dépôt: 09.09.2019
(51) Int. Cl.: F16L 13/02

(54) **PROCÉDÉ DE RÉALISATION D'UNE CONDUITE SOUS-MARINE EN ACIER APTE À VÉHICULER UN FLUIDE CORROSIF ET ÉLÉMENT DE CONDUITE**
VERFAHREN ZUR HERSTELLUNG EINES UNTERWASSERROHRS AUS STAHL, DAS EINE KORROSIVE FLÜSSIGKEIT FÜHREN KANN UND ROHRELEMENT
METHOD FOR PRODUCING A STEEL UNDERWATER PIPE THAT IS ABLE TO CARRY A CORROSIVE FLUID AND PIPE ELEMENT

(30) Priorité: 10.09.2018 FR 1858090
(43) Date de publication de la demande: 21.07.2021
(73) Titulaire: SAIPEM S.A, 78180 Montigny Le Bretonneux (FR)
(72) Inventeur: HALLOT, Raymond, 78960 Voisins Le Bretonneux (FR)
(74) Mandataire: Cabinet Beau de Loménie
(86) Numéro de dépôt international: PCT/FR2019/052066
(87) Numéro de publication internationale: WO 2020/053511

(56) Documents cités:
- WO-A1-2004/015321
- WO-A1-2008/037907
- FR-A1- 2 564 938
- US-B2- 8 714 597

## Description

Procédé de réalisation d'une conduite sous-marine en acier apte à véhiculer un fluide corrosif.

### Arrière-plan de l'invention

La présente invention se rapporte au domaine général des conduites de transport de fluides corrosifs, notamment des conduites sous-marines, reposant au fond de la mer ou assurant la liaison fond-surface pour le transfert d'eau ou d'hydrocarbures, par exemple de pétrole et de gaz, issus de puits de production sous-marins.

Ces conduites sont réalisées par soudage bout à bout des extrémités d'éléments de conduites qui peuvent être des extrémités d'éléments de conduites unitaires ou des extrémités de rames constituées chacune d'une pluralité d'éléments de conduites unitaires comme décrit dans WO 2008/037907 au nom de la demanderesse.

Les aciers constituant les conduites et les soudures entre éléments de conduites peuvent être sujet à la corrosion lorsque ladite conduite véhicule un fluide corrosif qui peut être notamment de l'eau ou un fluide comportant de l'eau et plus particulièrement de l'eau salée.

Pour pallier ce problème, on réalise des soudures à l'aide d'un acier allié résistant à la corrosion entre des éléments de conduite préalablement revêtus sur quelques cm au niveau des extrémités des éléments de conduite à souder ensemble, d'un acier allié résistant à la corrosion identique ou différent mais présentant des propriétés équivalentes, de manière à ce que la passe de pénétration de la soudure qui constituera la future paroi en contact avec le fluide soit du même métal ou équivalent au métal d'apport de la soudure, en particulier de l'inconel. Ce revêtement en acier allié anti corrosion, notamment de type inconel, peut se faire par la technique de rechargement réalisé en général à l'aide d'un procédé de soudage à l'arc électrique TIG associé à un fil d'apport en acier inoxydable ou alliage résistant à la corrosion comme décrit dans PCT/FR2018/050429 au nom de la demanderesse, ou par un procédé par torche plasma ou par un procédé de soudage GMAW ou par un procédé de soudage à l'arc sous flux (fil ou feuillard) SAW ou par placage par fusion par effet joule de feuillard selon la technique appelée « electroslag » avec flux electro-conducteur.

Les alliages anti corrosion sont bien connus de l'homme de l'art, il s'agit principalement d'alliage base nickel, de préférence de grade particulier, notamment en inconel 625 ou incoloy 825.

On connaît par ailleurs des procédés de protection contre la corrosion par chemisage plastique continu de la surface interne en acier de la conduite, à l'aide d'un revêtement souple en matériaux thermoplastiques notamment en polyéthylène haute densité appelé aussi « liner ». Mais, les extrémités des éléments de conduite à assembler par soudage ne doivent pas être pré-revêtues de dit chemisage en matériau plastique car celui-ci ne supporte pas les températures élevées mises en œuvre lors des opérations de soudage.

En outre, ces chemisages plastiques de type liner requièrent notamment un ancrage aux extrémités à l'aide de viroles, bagues ou manchons tubulaires pour que le chemisage tienne en place notamment en cas de variation de température.

Dans WO 2006/042925, WO 2012/017171, WO 2017/098327 et US 2018/0119850, entre autres, on assure la continuité du revêtement protecteur en matière plastique sous forme de liner thermoplastique aux extrémités des deux éléments de conduite à souder non revêtues dudit liner, en mettant en œuvre un manchon tubulaire de jonction en matériau anti corrosion, notamment en plastique entre les extrémités non chemisées de deux éléments de conduite à assembler lequel manchon chevauche de manière étanche les extrémités des deux revêtements thermoplastique à l'intérieur de la conduite et au droit de la soudure à réaliser. Ce type de solution permet d'éviter la réalisation de chemisage en acier allié anticorrosion et/ou de soudure en acier allié anticorrosion mais ces manchons tubulaires de jonction sont cependant complexes et coûteux à mettre en place.

Dans US 5, 992,897 et US 8, 714,597, on propose un système complexe qui nécessite de mettre en œuvre une pièce de raccordement en acier au carbone revêtue d'un chemisage en acier allié anticorrosion dans US 5, 992,897 ou une pièce de raccordement en acier allié anticorrosion dans US 8, 714,597, à l'extrémité de chaque élément de conduite et d'assembler par soudage en acier allié anticorrosion les extrémités des deux pièces de raccordement entre elles. Ceci nécessite au total 3 soudures, à savoir une soudure en acier allié anticorrosion entre deux pièces de raccordement bout à bout et deux soudures en acier ordinaire au carbone entre les extrémités des éléments de conduites et respectivement les deux extrémités de la pièce de raccordement. D'autre part, ceci nécessite de mettre en place le revêtement plastique dans les éléments de conduites et sur une partie de la pièce de raccordement seulement après avoir réalisé les soudures en acier au carbone, l'autre partie de paroi interne de la pièce de raccordement n'étant pas chemisée par un revêtement plastique pour permettre le soudage entre les deux pièces de raccordement.

Dans US 5,992,897, comme montré sur les figures 1A et 1B, on met en œuvre des pièces de raccordement 12 en acier au carbone revêtu d'un chemisage interne en acier anticorrosion 18 et la jonction entre le liner 30 et la paroi interne de la pièce de raccordement 12 est sécurisé en terme d'étanchéité par des bagues de compression 32 en acier anti corrosion d'une part et d'autre part un manchon 40 en matériau plastique qui assure la jonction sans chevauchement entre les deux extrémités des revêtements plastique au niveau des extrémités non chemisées en plastique des deux pièces de raccordement.

Dans US 8714597, sur les figures 1, 3 et 6C, les pièces de raccordement 5 sont en acier allié anticorrosion et la jonction entre le liner 13 et la paroi interne de la pièce de raccordement 5 est sécurisée en terme d'étanchéité par des bagues de compression en acier anti corrosion 9 qui chevauchent les extrémités du liner 13.

Enfin, FR 2 564 938 A divulgue un procédé de réalisation d'une conduite dans lequel des éléments de conduites sont soudés entre eux. Ces éléments de conduite en acier comprennent une couche en acier allié résistant à la corrosion sur une partie terminale, un revêtement de protection en matière plastique sur la paroi interne de l'élément de conduite et recouvrant une partie de la couche en acier allié, une partie de la couche en acier allié n'étant pas recouverte du revêtement de protection en matière plastique.

Le but de la présente invention est de fournir un procédé d'assemblage par soudage d'éléments de conduites sous-marines à partir d'un navire de pose en mer de conduites sous-marines ou à terre, qui soit :
- fiable en termes d'étanchéité au niveau de la transition entre la section revêtue d'un chemisage et la section revêtue d'acier allié résistant à la corrosion (i.e. l'eau ne s'infiltre pas sous le chemisage), et
- fiable en termes de résistance à la corrosion au niveau des soudures et notamment ne présente aucun risque d'effet de pile à l'intérieur de la conduite en opération, et
- fiable en termes de résistance à la fatigue au niveau de chacune des soudures, et
- en affectant le moins possible les performances de résistances mécaniques et / ou augmentant le moins possible les pertes de charges du fluide véhiculé à l'intérieur de la conduite en opération, et
- simple et le moins coûteux possible à mettre en œuvre, et notamment dans lequel on réalise le moins possible d'étape d'assemblage et notamment de soudage à bord du navire de pose.

Plus particulièrement, le but de la présente invention est de fournir un procédé d'assemblage par soudage d'éléments de conduites sous-marines revêtus d'un chemisage thermoplastique sans mise en œuvre de manchon tubulaire de jonction en matériau anticorrosion ni de pièce de raccordement en acier et qui ne requièrent qu'une unique soudure en acier allié anti corrosion au lieu de deux en acier au carbone et d'une en acier allié comme c'est le cas avec les pièces de raccordement en acier tel que décrit ci-dessus.

### Objet et résumé de l'invention

Pour ce faire la présente invention fournit un procédé de réalisation d'une conduite sous-marine en acier apte à véhiculer un fluide corrosif, notamment de l'eau, dont la paroi interne est partiellement chemisée par un revêtement de protection en matière plastique de type liner, dans lequel on assure l'assemblage par soudage directement entre elles des extrémités d'au moins deux éléments de conduites comprenant les étapes dans lesquelles on réalise successivement :
a) l'application, de préférence par soudage, d'une couche en acier allié résistant à la corrosion sur une partie terminale de longueur L1 de la paroi interne de chaque élément de conduite depuis son extrémité à souder ;
b) l'usinage en surface intrados de la couche en acier allié résistant à la corrosion,
c) l'application d'un dit revêtement de protection en matière plastique, de préférence sous forme d'enveloppe tubulaire, directement sur la paroi interne de chaque élément de conduite ; et recouvrant une première partie de longueur L2 de la dite couche en acier allié résistant à la corrosion, une deuxième partie adjacente de longueur L3 de la dite couche en acier allié résistant à la corrosion du côté de l'extrémité à souder de chaque élément de conduite n'étant pas recouverte du dit revêtement de protection en matière plastique,
d) l'insertion de manière coaxiale (XX') d'une bague de compression en acier allié résistant à la corrosion à l'intérieur de ladite partie terminale de chaque élément de conduite et le sertissage d'une première partie annulaire de longueur L4 de la dite bague de compression contre la face intrados de la partie terminale dudit revêtement de protection en matière plastique recouvrant une première partie de la dite couche en acier allié résistant à la corrosion, et le soudage de l'extrémité libre d'une deuxième partie annulaire de la dite bague de compression contre une deuxième partie de la dite couche en acier allié résistant à la corrosion non recouverte dudit revêtement de protection en matière plastique, la dite première partie annulaire de la bague de compression comprenant une face extrados qui est crénelée, sur une partie au moins de sa longueur, de préférence sous forme d'une pluralité de premières rainures périphériques circulaires parallèles, ladite deuxième partie annulaire de la dite bague de compression prolongeant la dite première partie annulaire, ladite deuxième partie annulaire de la bague de compression étant appliquée contre une partie de la dite deuxième partie de la couche en acier allié résistant à la corrosion non recouverte dudit revêtement en matière plastique et s'étendant sur une longueur L5 inférieure à L3, depuis et contre l'extrémité dudit revêtement en matière plastique jusqu'à la dite extrémité libre de la dite bague de compression la plus proche de l'extrémité à souder de l'élément de conduite, et
e) l'assemblage par soudage directement entre elles des extrémités à souder de deux éléments de conduites par une soudure en acier allié résistant à la corrosion.

On comprend que les dites première et deuxième parties de la couche en acier allier d'une part et d'autre part les dites première et deuxième parties annulaires de la bague de compression sont respectivement deux parties contigües dans la direction longitudinale de l'élément de conduite.

Le procédé selon l'invention est avantageux en ce qu'il permet d'assembler les éléments de conduite à souder directement entre eux avec une soudure périphérique en acier anticorrosion et d'assurer la protection contre la corrosion de la paroi interne de la conduite transportant un fluide corrosif avec un revêtement de protection en matière plastique (liner thermoplastique) sur la partie courante des éléments de conduites et un revêtement en acier anticorrosion aux extrémités à souder bout à bout des deux éléments de conduite, et ce sans mise en œuvre de manchon tubulaire de jonction assurant la jonction entre les deux liners des deux éléments de conduite d'une part et/ou sans intercaler de pièce de raccordement en acier de plus petite dimension que le dit élément de conduite à souder entre les deux éléments de conduite d'autre part. Ainsi, il est aisé de préparer les éléments de conduite à terre et réaliser l'assemblage par soudage de l'étape e) en mer sur le navire de pose.

La dite première partie de la bague de compression sertie assure d'une part la protection et l'isolation de la partie terminale du revêtement en plastique de type liner lors du dit soudage des extrémités des éléments de conduite et assure d'autre part la fiabilité de l'étanchéité évitant tout décollement du revêtement plastique ou liner et pénétration de fluide entre le revêtement en plastique et la paroi interne en acier de la conduite. Et, la deuxième partie annulaire de la bague de compression contribue à l'isolation de la partie terminale du revêtement en plastique et l'étanchéité entre le revêtement en plastique et la paroi en acier de la conduite. Le soudage de l'extrémité de la deuxième partie annulaire de la bague de compression contre la deuxième partie de la dite couche en acier allié résistant à la corrosion non recouverte dudit revêtement de protection en matière plastique a un double but, celui de renforcer l'ancrage longitudinal de la bague dans la conduite, mais aussi comme elle est continue et étanche, de renforcer l'étanchéité de la première partie de la bague de compression sertie. En effet, cette soudure continue et étanche prévient toute fuite au niveau de l'extrémité de la bague. Ainsi, le système constitué de la bague et du revêtement plastique comporte une double barrière d'étanchéité.

De préférence, la dite bague de compression comprend une dite deuxième partie annulaire dont la surface intrados est de forme conique reliant la surface intrados de la première partie annulaire et la surface de la deuxième partie de la couche en acier allié résistant à la corrosion non recouverte dudit revêtement en matière plastique, à l'extrémité de la dite deuxième partie annulaire de la bague de compression la plus proche de l'extrémité de l'élément de conduite.

On entend ici par « deuxième partie annulaire dont la surface intrados est de forme conique », une forme de ladite deuxième partie annulaire à section longitudinale sensiblement en forme de triangle rectangle dont l'angle droit vient buter sur la tranche de l'extrémité du dit revêtement plastique ou liner et l'hypoténuse constitue une dite surface intrados inclinée de la deuxième partie annulaire. Cette forme conique crée ainsi une variation progressive du diamètre interne de la conduite au niveau de la transition entre la partie terminale de la couche en alliage anticorrosion non chemisée par le revêtement en matière plastique et la partie terminale du revêtement en matière plastique en sur épaisseur par rapport à la deuxième partie terminale de la couche en alliage anticorrosion non chemisée par le liner, dans le but de limiter les pertes de charge singulières, d'offrir un passage progressif sans arête vive aux pistons racleurs, et enfin de limiter les risques d'érosion pour le transport de fluide à grande vitesse d'écoulement ou quand le dit fluide contient des particules abrasives.

Avantageusement encore, ladite deuxième partie annulaire de la bague de compression, de préférence de forme conique, s'étend contre ladite partie terminale de la couche en acier allié résistant à la corrosion sur une longueur L5 d'environ 1/2 de L3 la longueur de partie terminale de la couche en acier allié résistant à la corrosion non recouverte dudit revêtement en matière plastique.

De préférence, à l'étape b), on réalise un usinage de manière à créer un crénelage, de préférence encore sous forme d'une pluralité de deuxièmes rainures périphériques circulaires parallèles, sur la première partie de la face intrados de la couche en acier allié résistant à la corrosion destinée à être recouverte d'une partie terminale du dit revêtement de protection en matière plastique.

Plus particulièrement encore, à l'étape c), l'extrémité dudit revêtement de protection en matière plastique se termine à une distance L3 de l'extrémité à souder de chaque élément de conduite, L3 étant au moins égale à 1/3, de préférence au moins 1/2 de la longueur L1 de la dite couche en acier allié résistant à la corrosion. Ceci permet d'éloigner de façon suffisante ledit revêtement de protection en matière plastique du site de soudage à l'extrémité de l'élément de conduite.

Plus particulièrement encore, à l'étape a), la couche en acier allié résistant à la corrosion sur la partie terminale de la paroi interne de chaque élément de conduite s'étend sur une longueur L1 de 1/2 à 2 fois le diamètre interne D1 de l'élément de conduite avant usinage et/ou de 4 à 20 fois l'épaisseur de l'élément de conduite avant usinage, de préférence L1 étant sensiblement égal à D1.

Plus particulièrement encore, à l'étape d), la dite bague de compression comprend au moins une première partie annulaire dont la face extrados est crénelée, sur une longueur d3, de préférence sensiblement égale à et en vis-à-vis d'une longueur d2 de la partie crénelée de la première partie de la couche en acier allié résistant à la corrosion, lesdites premières et deuxièmes rainures périphériques circulaires parallèles étant de profondeur de 1 à 1,5 mm et, s'étendant sur une longueur de 1/5 à 1/2 de L1 de préférence de 1/4 à 1/3 de L1 et avec une distance de 4 à 6mm entre les dites premières rainures circulaires et respectivement entre lesdites deuxièmes rainures circulaires.

Plus particulièrement encore, avant l'étape a), on réalise un usinage préalable de l'alésage de ladite partie terminale de longueur L1 de la paroi interne de chaque élément de conduite, sur une profondeur destinée à recevoir la dite couche en acier allié résistant à la corrosion de 1 à 5 mm, de préférence 3 mm, et à l'étape b), on réalise un usinage en surface intrados de la couche en acier allié résistant à la corrosion au diamètre interne de la conduite avant le dit usinage préalable.

Plus particulièrement encore, avant l'étape e), on réalise en outre un usinage de finition de l'extrémité de la conduite pour former un chanfrein permettant de recevoir un cordon de soudure lors de l' étape e) d'assemblage bout à bout par soudage.

Plus particulièrement, la couche en acier allié résistant à la corrosion, la dite bague de compression et les dites soudures en acier allié résistant à la corrosion sont réalisées en même acier allié anticorrosion, notamment de l'Inconel 625^{®}.

Plus particulièrement, la conduite est réalisée en acier au carbone et présente un diamètre interne D1 de 150 à 750 mm, une épaisseur e de 5 à 75 mm.

Plus particulièrement encore, on réalise les étapes dans lesquelles :
1) on prépare des éléments de conduites à souder entre eux en réalisant les étapes a) à d) ci-dessus, et
2) on réalise l'étape e) d'assemblage par soudage avec un acier allié résistant à la corrosion des extrémités à souder respectives d'au moins 2 éléments de conduite obtenus selon l'étape 1) ci-dessus, de préférence en mer à partir d'un navire de pose.

Plus particulièrement encore, on réalise les étapes dans lesquelles :
1) on prépare des éléments de conduites à souder entre eux en réalisant les étapes a) à d), en atelier à terre, et
2) on réalise en mer à partir d'un navire de pose l'étape e) d'assemblage par soudages des extrémités respectives d'au moins 2 éléments de conduite.

La présente invention fournit également un élément de conduite obtenu à l'étape 1) et utile à l'étape 2) ci-dessus du procédé de l'invention, le dit élément de conduite comprenant :
- une couche en acier allié résistant à la corrosion sur une partie terminale de longueur L1 de la paroi interne dudit élément de conduite depuis une extrémité à souder;
- un revêtement de protection en matière plastique, de préférence sous forme d'enveloppe tubulaire, appliqué directement sur la paroi interne dudit élément de conduite; et recouvrant une première partie de longueur L2 de la dite couche en acier allié résistant à la corrosion, une deuxième partie de longueur L3 de la dite couche en acier allié résistant à la corrosion du côté de l'extrémité à souder dudit élément de conduite n'étant pas recouverte de dit revêtement de protection en matière plastique,
- une bague de compression en acier allié résistant à la corrosion insérée à l'intérieur de l'élément de conduite comprenant
   (a) une première partie annulaire de longueur L4 comprenant une face extrados qui est crénelée, sur une partie au moins de sa longueur L4, de préférence sous forme d'une pluralité de premières rainures périphériques circulaires parallèles, la dite première partie annulaire étant sertie contre la face intrados d'au moins une partie terminale dudit revêtement de protection en matière plastique recouvrant ladite première partie de la dite couche en acier allié résistant à la corrosion, et
   (b) une deuxième partie annulaire de longueur L5 inférieure à L3, prolongeant la dite première partie annulaire, appliquée contre une partie de la dite deuxième partie de la couche en acier allié résistant à la corrosion non recouverte dudit revêtement en matière plastique, la dite deuxième partie annulaire de la dite bague de compression s'étendant depuis et contre l'extrémité dudit revêtement en matière plastique jusqu'à ladite extrémité libre de la dite bague de compression la plus proche de l'extrémité à souder de l'élément de conduite, soudée contre ladite deuxième partie de la dite couche en acier allié résistant à la corrosion non recouverte dudit revêtement de protection en matière plastique.

Plus particulièrement, le dit élément de conduite comprend :
- une première partie de la face intrados de la couche en acier allié résistant à la corrosion destinée à être recouverte d'une partie terminale du dit revêtement de protection en matière plastique, est usinée en crénelage en partie au moins, de préférence sous forme d'une pluralité de dites deuxièmes rainures périphériques circulaires parallèles, et
- la dite bague de compression comprend au moins :
   (a) une première partie annulaire dont la face extrados est en partie au moins crénelée, de préférence sous forme d'une pluralité de dites premières rainures périphériques circulaires parallèles, apte à recouvrir la dite partie terminale du dit revêtement de protection en matière plastique, au droit au moins de la partie crénelée de la première partie de la couche en acier allié résistant à la corrosion dont la face intrados est recouverte de la partie terminale du dit revêtement de protection en matière plastique, ladite première partie annulaire s'étendant au droit de la deuxième partie de la couche en acier allié résistant à la corrosion non recouverte par ledit revêtement en matière plastique, et
   (b) une dite deuxième partie annulaire dont la surface intrados est de forme conique reliant la surface intrados de la première partie annulaire et la surface de la deuxième partie de la couche en acier allié résistant à la corrosion non recouverte dudit revêtement en matière plastique, à l'extrémité de la dite deuxième partie annulaire de la bague de compression soudée contre ladite deuxième partie de la dite couche en acier allié résistant à la corrosion non recouverte dudit revêtement de protection en matière plastique.

La présente invention fournit également un élément de conduite hybride selon l'invention dans lequel, l'autre extrémité dudit élément de conduite hybride qui n'est pas destinée à être soudée dans la dite étape 2), ne comprend pas de dite bague de compression mais comprend un manchon tubulaire de jonction rigide en matériau thermoplastique, une première extrémité longitudinale du dit manchon étant en contact étanche ou venant de matière en continuité avec l'autre extrémité du dit revêtement en matière plastique à l'intérieur du dit élément de conduite hybride, une deuxième extrémité dudit manchon dépassant d'une longueur L0 en dehors de l'autre extrémité du dit élément de conduite hybride.

Plus particulièrement, ladite deuxième extrémité dudit manchon dépassant en dehors de l'autre extrémité dudit élément de conduite hybride est insérée à l'intérieur d'un autre élément de conduite en contact étanche de préférence par électrofusion, avec l'extrémité d'un revêtement en matière plastique en retrait d'une longueur L0 à l'intérieur d'un autre élément de conduite par rapport à l'extrémité dudit autre élément de conduite assemblé par soudage en acier allié avec ledit élément de conduite hybride.

La présente invention fournit également une conduite sous-marine en acier apte à véhiculer un fluide corrosif, notamment de l'eau, dont la paroi interne est partiellement chemisée par un revêtement de protection en matière plastique de type liner dans lequel on assure l'assemblage par soudage directement entre elles des dites extrémités à souder d'au moins deux éléments de conduites selon l'invention comprenant chacun une dite bague de compression du côté de la dite extrémité à souder.

De préférence, la dite couche métallique en alliage anticorrosion est déposée par soudage en plusieurs couches comme décrit dans la demande de brevet FR 1752255 au nom de la demanderesse.

Dans une autre version, on utilise le procédé de revêtement en alliage anti corrosion par placage par fusion par effet joule de feuillard d'un acier allié anti corrosion connu de l'homme de l'art sous le nom d'électroslag. Ce procédé utilise un feuillard de 20 à 50 mm de largeur et de 0,5 à 1mm d'épaisseur, que l'on fait fondre, l'énergie nécessaire pour fondre le feuillard et le métal de base de la conduite étant fournie par effet joule et non pas par un arc électrique, ce qui minimise de manière radicale la perturbation de l'interface entre l'acier de base de la conduite et l'acier inoxydable ou l'alliage anti corrosion.

En procédant ainsi, le plasma ou le métal fondu par électroslag crée une zone de fusion beaucoup plus régulière sur la surface active qu'une torche TIG associée à un fil d'apport, facilitant l'utilisation de techniques ultrasons pour effectuer le contrôle de la soudure.

De préférence, il convient que la surface de la conduite en acier sur laquelle est déposé l'acier allié anti corrosion présente une géométrie cylindrique de section circulaire et uniforme, en fin de processus.

Ainsi, on usine tout d'abord l'alésage de l'élément de conduite avec une grande précision sur ladite première longueur, soit par exemple environ 150mm, puis on applique la dite couche en acier allié résistant à la corrosion, que l'on usine ensuite au diamètre nominal intérieur de la conduite, pour obtenir une cylindricité précise.

Dans un mode de réalisation, le procédé de revêtement de la couche d'acier allié résistant à la corrosion comprend plus précisément :
- l'alésage de la surface interne sur une certaine profondeur jusqu'à obtenir un fini brillant, et
- le dépôt de la couche d'acier allié anti corrosion sur une épaisseur supérieure à ladite profondeur de l'alésage, puis
- le réalésage de la surface du dépôt de dit acier allié anti corrosion, pour aplanir sa surface au même niveau que la surface adjacente en acier au carbone non revêtue de dit acier inoxydable ou dit alliage résistant à la corrosion.

L'alésage initial permet que la surface interne de la conduite sur laquelle est déposé l'acier allié résistant à la corrosion présente un état de surface de très haute qualité de manière à ce que l'interface entre les deux qualités d'acier ou alliage : l'acier au carbone de base et l'acier allié résistant à la corrosion déposé soit sensiblement cylindrique et de section sensiblement circulaire. D'autre part, un rechargement uniforme de grande précision permet de réaliser le contrôle de la soudure par des tests à ultrasons précis et fiables.

Optionnellement, l'application du revêtement en matière plastique comprend une étape d'encollage de la surface externe desdites enveloppes mises en forme tubulaire à l'extérieur de la conduite avant application sur la surface interne de la conduite.

Optionnellement encore, lesdites surfaces externes des enveloppes sont préalablement traitées par un jet de plasma froid d'air avant encollage.

Pour l'application du revêtement en matière plastique, un procédé couramment employé dénommée « Swagelining » qui consiste à tirer une enveloppe tubulaire ou tuyau de plastique à travers une filière diminuant son diamètre à l'intérieur de la conduite destinée à être chemisée de plastique.

Dans un autre mode de réalisation, lesdites enveloppes sont introduites sous forme pliées à l'intérieur de la rame optionnellement après encollage, puis remise en forme tubulaire par expansion radiale et plaquage de la surface externe de chaque enveloppe contre la surface interne de la conduite, de préférence par gonflage sous pression ou pressurisation au moyen d'un ballon cylindrique de longueur supérieure à la longueur de ladite enveloppe, préalablement introduit à l'intérieur de ladite enveloppe.

Plus particulièrement, lesdites enveloppes après encollage sont pliées longitudinalement de manière à présenter en section transversale un contour en forme de haricot puis introduites à l'aide d'un chariot à l'intérieur de la conduite dans laquelle elles sont remises en forme tubulaire pour être plaquées contre la surface interne de la conduite.

Plus particulièrement encore, la surface interne desdits éléments de conduite est traitée par sablage au niveau des zones de dit chemisage en revêtement plastique avant d'appliquer ledit chemisage de revêtement plastique.

De façon connue, lesdites enveloppes tubulaires sont réalisées en matériaux plastiques choisis parmi les polyuréthanne, époxy, caoutchouc, polypropylène, polyéthylène et polyamide, élastomère fluoré, poly fluorure de vinylidène (PVDF) et silicone. De préférence, on met en œuvre un revêtement plastique en polyéthylène haute densité (PEHD).

La présente invention fournit également des conduites sous-marines de liaison fond-surface dont au moins une partie est obtenue par un procédé selon l'invention.

Plus particulièrement, les conduites sous-marines de liaison fond-surface selon l'invention sont des conduites caténaires du type SCR (en anglais, steel catenary riser) s'étendant selon une configuration en forme de chaînette et dont au moins une partie comprenant la zone en contact avec le sol s'étend sur au moins 100m, de préférence 200m au-dessus du sol, a été assemblée par un procédé selon l'invention.

Les différentes longueurs d2, d3 et L1 à L5 s'entendent de dimensions dans la direction longitudinale XX' des éléments de conduites. On comprend que L1=L2+L3, d2 est inférieur à L4, L4 est inférieur à L2 et L5 est inférieur à L3.

On entend ici par « épaisseur e de la conduite » et « diamètre interne D1 de la conduite », l'épaisseur et le diamètre de la partie courante en acier au carbone des éléments de conduite non revêtus de dits revêtements en matière plastique et dites couches métalliques en alliage anticorrosion.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A à 1F illustrent différentes étapes d'un exemple de réalisation du chemisage d'un élément de conduite 10, 10-1 et 10-2 pour mise en œuvre du procédé selon l'invention ;
- la figure 2 illustre l'assemblage par soudage de deux éléments de conduites mis bout à bout pour mise en œuvre du procédé selon l'invention ; et
- la figure 3 est une variante de réalisation d'un élément de conduite chemisé sur la paroi interne non usinée d'un élément de conduite 10 ; et
- les figures 4A - 4C illustrent une variante de réalisation impliquant la mise en œuvre d'un élément de conduite hybride équipé d'un manchon tubulaire de jonction 5.

### Description détaillée de l'invention

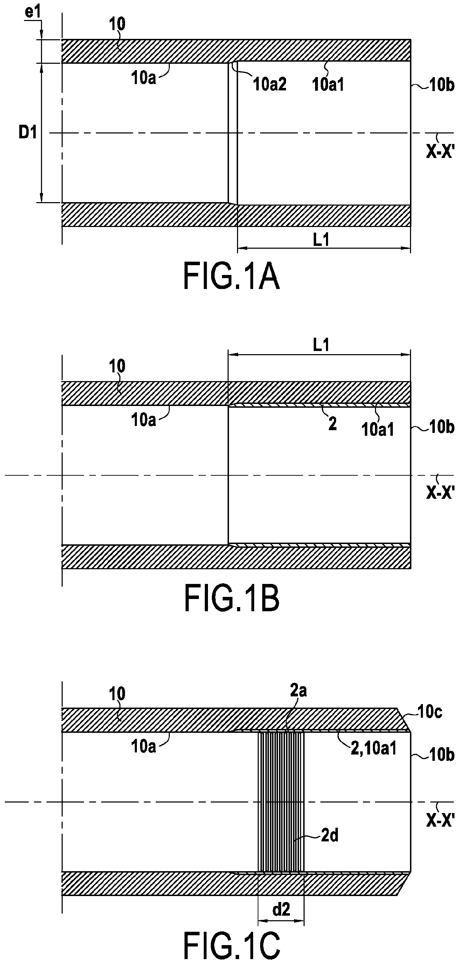

Sur la figure 1A, on montre un élément de conduite 10 dont l'alésage d'une partie terminale 10a1 de la paroi interne 10a a été usinée sur une profondeur de 1 à 5 mm, de préférence 3 mm, s'étendant depuis l'extrémité à souder 10b de l'élément de conduite sur une longueur L1 de ½ à 2 fois le diamètre interne D1 de l'élément de conduite avant usinage, ou de 4 à 20 fois l'épaisseur e de l'élément de conduite avant usinage, et se terminant par un chanfrein interne 10a2. De préférence L1 est égale au diamètre interne D1 de l'élément de conduite avant usinage. En pratique le diamètre interne D1 est de 150 à 750 mm et l'épaisseur est alors de respectivement 5 à 75 mm.

Sur la figure 1B, la partie terminale 10a1 de la paroi interne 10a de l'élément de conduite 10 est revêtue d'un rechargement 2 ('weld overlay') en acier allié résistant à la corrosion du fluide à transporter.

Sur la figure 1C, ce rechargement 2 a été ensuite usiné selon le diamètre interne nominal D1 de la conduite dans sa partie courante. Sur la figure 1C, on montre la création sur l'intrados du rechargement anticorrosion 2 d'un crénelage sur une première partie 2a de la couche de rechargement 2 à proximité du chanfrein 10a2, constitué par une pluralité de rainures périphériques circulaires parallèles 2d, de profondeur de 1 à 1,5 mm s'étendant sur une longueur d2 de 1/5 à ½ de L1 de préférence de 1/4 à 1/3 de L1, par exemple d'environ 75 mm si L1= D1= 210mm et avec une distance entre les rainures circulaires de 4 à 6mm.

Sur la figure 1C, on a aussi réalisé un usinage de finition de l'extrémité 10 de l'élément de conduite 10 et de l'extrémité correspondante de la couche de rechargement 2 de façon à former une portion de chanfrein 10c pour le dépôt d'un cordon de soudure destiné à l'assemblage bout à bout de deux éléments de conduites 10-1, 10-2.

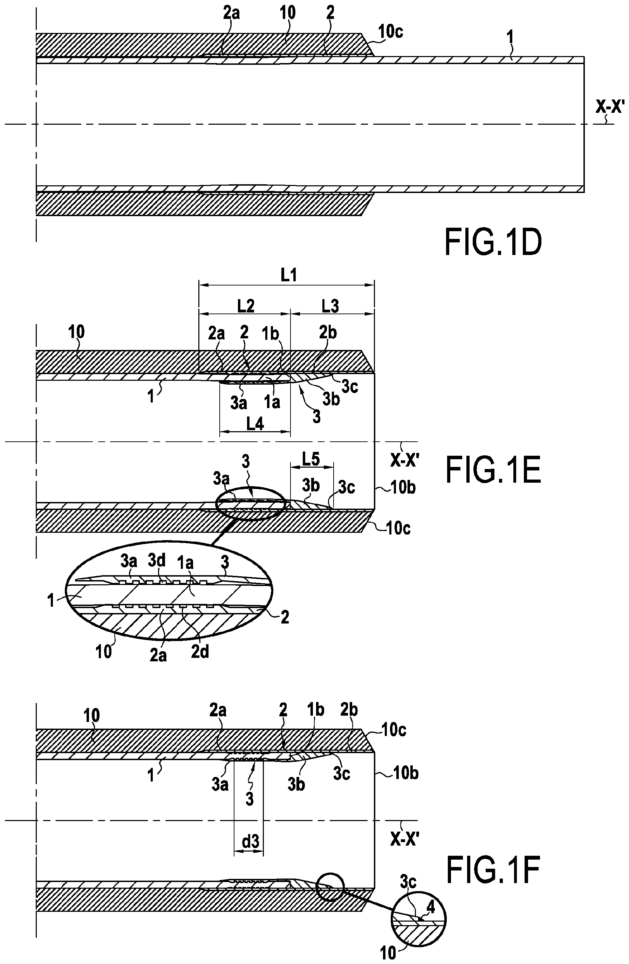

Sur la figure 1D, on réalise ensuite un chemisage sous forme d'un revêtement en matériau plastique souple 1 dénommé « liner » de préférence en polyéthylène haute densité ou matériau polymère compatible avec le fluide à transporter. Pour ce faire, de façon connue selon le procédé dit de swagelining, une enveloppe tubulaire interne est alors insérée dans la conduite 10 puis relâchée pour être plaquée ou collée contre la paroi interne.

Puis, comme représenté en figure 1E, après le délai requis, la dite enveloppe tubulaire du liner 1 est coupée à l'emplacement 1b spécifié sur la couche de rechargement 2, l'extrémité non chemisée par le liner 1 s'étend sur une longueur L3 depuis l'extrémité 10b de l'élément de conduite à souder d'environ au moins la moitié de L1. Ainsi, seule une première partie 2a de la couche de longueur L2 comprenant le crénelage de la couche 2 en alliage résistant à la corrosion est recouverte par ledit revêtement de protection en matière plastique 1, une deuxième partie terminale 2b de longueur L3 sensiblement égale à L2 de la couche 2 en alliage résistant à la corrosion n'est pas recouverte par ledit revêtement de protection en matière plastique (1).

Sur la figure 1E, une bague 3 en acier allié résistant à la corrosion, comportant :
(a) une première partie annulaire 3a dont la face extrados est en partie crénelée avec une pluralité de rainures périphériques circulaires parallèles 3d, sur une longueur d3 ici sensiblement identique à d2, la partie 3a étant apte à être insérée et recouvrir une partie terminale la de chemise 1 en polyéthylène haute densité, sur une longueur L4, au droit de la partie du rechargement 2 dont la face intrados est muni de rainures 2a, L4 étant inférieur à L3, et
(b) une forme conique 3b prolongeant la première partie 3a apte à être insérée puis soudée sur la paroi interne de l'élément de conduite revêtue du seul rechargement 2, s'étendant depuis et contre l'extrémité 1b du chemisage plastique 1 sur une longueur L5 d'environ ½ de L3 jusqu'à son extrémité 3c la plus proche de l'extrémité 10b de l'élément de conduite 10.

Sur la figure 1F, un manchon ou autre outil expansible ou déformable, notamment gonflable (non représenté) inséré dans l'élément de conduite a permis de réaliser sous pression le sertissage de la partie crénelée de la première partie 3a de la bague 3 et la partie crénelée de la première partie 2a de la couche 2 en acier allié anticorrosion par déformation plastique contre la partie la de chemise 1 en polyéthylène haute densité. Le sertissage de la bague de compression 3 combinée aux secteurs crénelés 2a, 3a contribuent à protéger la partie terminale la du liner 1 lors du soudage 11 ultérieur et l'étanchéité de la liaison liner- paroi en acier 10a. Sur la figure 1F, l'extrémité 3c du cône 3b est soudée par une soudure en acier allié anticorrosion 4 de manière à parfaire l'étanchéité et éviter que du liquide corrosif puisse pénétrer sous la bague 3.

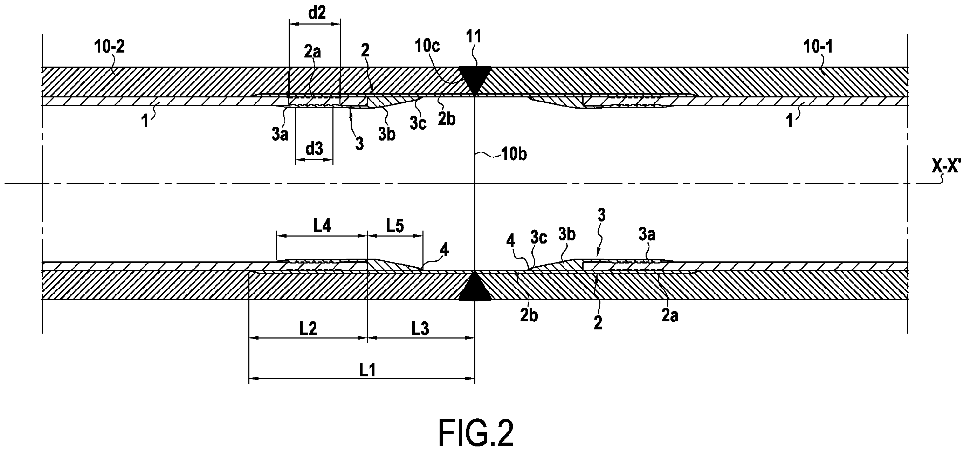

Sur la figure 2, les deux extrémités 10b des deux éléments de conduite 10-1 et 10-2 ainsi chemisées sont alors soudées bout à bout par une soudure 11 périphérique réalisée par un procédé de soudage d'acier allié résistant à la corrosion au niveau des chanfreins 10c.

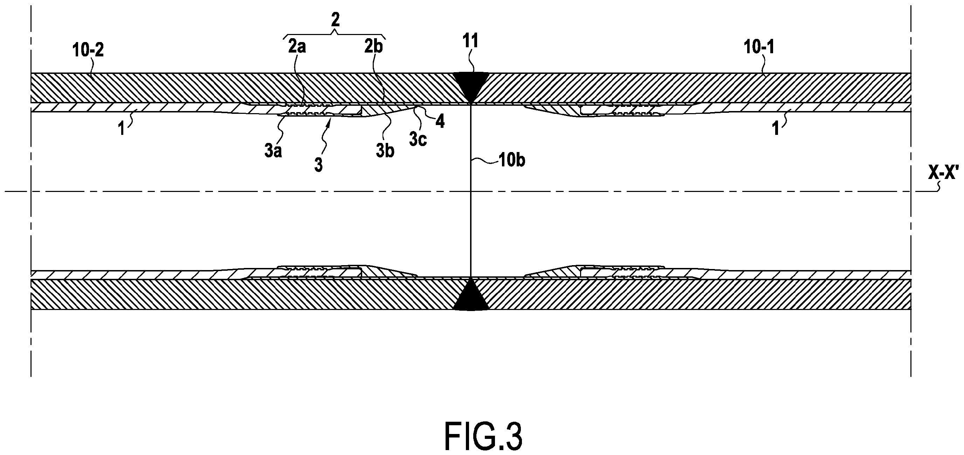

Sur la figure 3, on a représenté une variante non préférée dans laquelle la paroi interne 10a de l'élément de conduite 10, 10-1, 10-2 n'est pas usinée avant dépose du rechargement 2 formant un revêtement en acier allié anti corrosion 2 lequel crée un épaulement 2b d'épaisseur correspondant à l'épaisseur de 3 mm du rechargement 2 par rapport au diamètre interne nominal de la conduite.

Le procédé selon l'invention s'applique au chemisage de toute conduite en acier destinée au transport de fluides, notamment aux conduites sous-marines, reposant au fond de la mer ou assurant la liaison fond-surface pour le transfert d'hydrocarbures, par exemple de pétrole et de gaz, issus de puits de production sous-marins.

De préférence, la couche de rechargement en acier allié anti corrosion 2 et la bague de compression 3 sont réalisées en Inconel 625^{®}, c'est-à-dire en alliage Ni 61 / Cr 22 / Mo 9 / Fe 5. Un tel alliage d'acier inoxydable est particulièrement réputé pour sa grande robustesse et ses propriétés de résistance à la corrosion.

La couche de rechargement 2 peut avantageusement être déposée par soudage en plusieurs couches comme décrit dans la demande de brevet FR 1752255 au nom de la demanderesse.

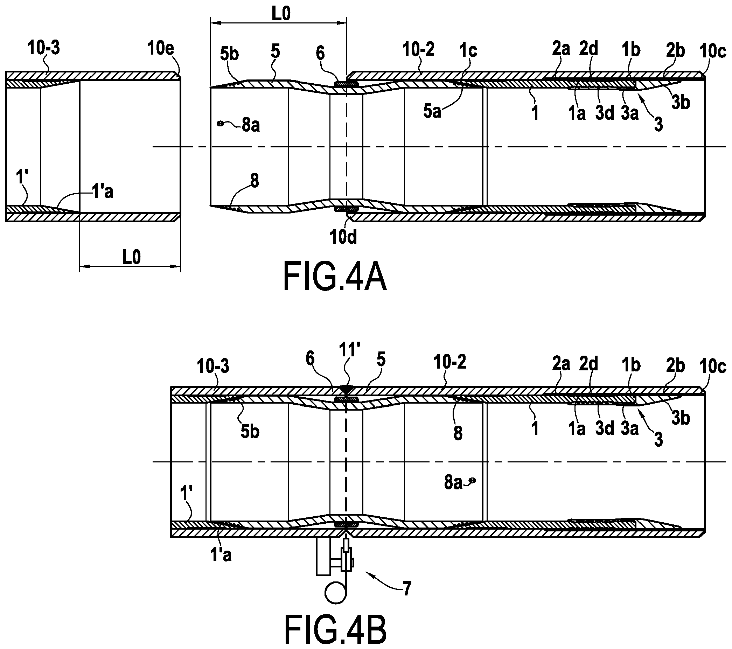

Dans certains cas, il peut arriver que l'on doive effectuer un raccordement à une conduite existante au fond de la mer comportant un élément de conduite terminal 10-3 non équipé d'une dite bague de compression et couche d'acier allié résistant à la corrosion et dans lequel on peut difficilement directement sertir une telle bague de compression selon l'invention *in situ* dans sa partie terminale ou encore en cas de découpe de la conduite en train d'être posée à un emplacement imprévu. Dans un tel cas, tel que représenté figures 4A-4B, on peut ajouter à l'élément de conduite terminal 10-3 au fond de la mer, un élément de conduite hybride 10-2 selon l'invention équipé (a) d'un manchon tubulaire de jonction 5 dépassant de L0 à l'extérieur d'une extrémité 10d de l'élément de conduite hybride 10-2 destinée à être assemblée audit élément de conduite terminal 10-3 au fond de la mer et (b) d'une bague de compression 3 et couche d'acier allié résistant à la corrosion selon l'invention à son autre extrémité 10c destinée à être assemblée à un élément de conduite 10-1 équipé d'une bague de compression et couche d'acier allié résistant à la corrosion selon l'invention. L'autre extrémité 5a du manchon tubulaire de jonction 5 à l'intérieur de l'élément de conduite hybride 10-2 peut être biseautée ou chanfreinée et ainsi assemblée de façon connue (par exemple par électro fusion comme décrit dans FR 2 963 654) à une extrémité biseautée ou chanfreinée de forme complémentaire 1c en butée du chemisage plastique 1 de l'élément de conduite hybride 10-2 du côté opposé à la bague de compression. Par exemple, les extrémités 5a et 5b de forme conique du manchon 5 sont munies chacune d'un fil spiralé 8 enroulé sur la surface conique 5a, 5b de sorte qu'alimenté en courant électrique en 8a, un soudage par électrofusion des dites extrémités 5a, 5b peut être effectué contre les extrémités complémentaires en butée 1c et l'a des chemisages en plastique des éléments de conduite 10-2 et 10-3 respectivement.

Pour ce faire, on réalise les étapes suivantes :
- dénudage de la chemise en plastique 1' de l'extrémité de l'élément de conduite terminal 10-3 du pipe chemisé au fond de la mer sur la longueur L0 adéquate,
- préparation du chanfrein de soudure l'a de l'extrémité de la chemise en plastique apte à être assemblée par exemple par soudage par électrofusion ou autre avec l'extrémité d'un manchon tubulaire de jonction,
- remise au diamètre de l'élément de conduite terminal 10-3 acier si nécessaire et chanfreinage terminal 10e,
- insertion de l'extrémité chanfreinée 5b extérieure du manchon tubulaire de jonction plastique 5 de l'élément de conduite hybride 10-2 dans l'extrémité de l'élément de conduite 10-3 jusqu'à venir en butée sur le chanfrein l'a à souder par électrofusion de la chemise en plastique l'de l'élément de conduite 10-3, le manchon 5 dépassant de L0 de l'extrémité 10d de l'élément hybride 10-2 de sorte que l'extrémité 10d de l'élément hybride 10-2 arrive en butée ou à proximité de l'extrémité 10e de l'élément de conduite 10-3 pour permettre leur soudage en acier allié 11', et
- assemblage de préférence par soudage par électrofusion du chanfrein 5b du manchon plastique de l'élément hybride 10-2 à celui l'a de la chemise en plastique 1' de l'élément de conduite 10-3, et
- soudage en acier allié 11' de l'extrémité 10d de l'élément hybride 10-2 avec l'extrémité 10e de l'élément de conduite 10-3 munie de l'écran 6 à l'aide du dispositif de soudage 7. Cet écran 6 en céramique limite le transfert de chaleur et protège le manchon thermoplastique pendant toute la durée du processus de soudage.

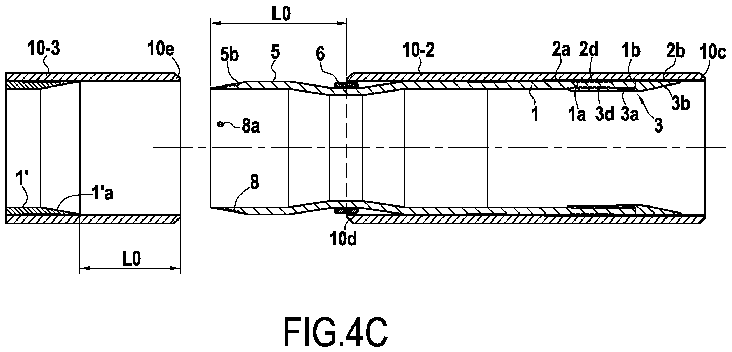

Sur la figure 4C, on a représenté un mode de réalisation préféré dans lequel dans l'élément de conduite hybride 10-2, le manchon 5 vient de matière en continuité du revêtement en plastique 1, il n'y a donc pas de soudage par électrofusion à réaliser à la jonction des extrémités 5a/1c à l'intérieur de l'élément de conduite hybride 10-2 comme sur la figure 4A.

## Revendications

1. Procédé de réalisation d'une conduite sous-marine en acier apte à véhiculer des fluides corrosifs, notamment de l'eau, dont la paroi interne est partiellement chemisée par un revêtement de protection en matière plastique de type liner (1) dans lequel on assure l'assemblage par soudage (11) directement entre elles des extrémités (10b) d'au moins deux éléments de conduites (10, 10-1, 10-2) comprenant les étapes dans lesquelles on réalise successivement :
a) l'application, de préférence par soudage, d'une couche (2) en acier allié résistant à la corrosion sur une partie terminale (10a1) de longueur L1 de la paroi interne (10a) de chaque élément de conduite (10, 10-1, 10-2) depuis son extrémité à souder (10b);
b) l'usinage en surface intrados de la couche (2) en acier allié résistant à la corrosion,
c) l'application d'un dit revêtement de protection en matière plastique (1), de préférence sous forme d'enveloppe tubulaire, directement sur la paroi interne (10a) de chaque élément de conduite (10-1, 10-2); et recouvrant une première partie (2a) de longueur L2 de la dite couche (2) en acier allié résistant à la corrosion, une deuxième partie (2b) adjacente de longueur L3 de la dite couche (2) en acier allié résistant à la corrosion du côté de l'extrémité (10b) à souder de chaque élément de conduite n'étant pas recouverte du dit revêtement de protection en matière plastique (1),
d) l'insertion de manière coaxiale (XX') d'une bague de compression (3) en acier allié résistant à la corrosion à l'intérieur de ladite partie terminale (10a1) de chaque élément de conduite (10) et le sertissage d'une première partie annulaire (3a) de longueur L4 de la dite bague de compression contre la face intrados de la partie terminale (1a) dudit revêtement de protection en matière plastique (1) recouvrant une première partie (2a) de la dite couche (2) en acier allié résistant à la corrosion, et le soudage (4) de l'extrémité libre (3c) d'une deuxième partie annulaire (3b) de la dite bague de compression contre une deuxième partie (2b) de la dite couche (2) en acier allié résistant à la corrosion non recouverte dudit revêtement de protection en matière plastique (1), la dite première partie annulaire (3a) de la bague de compression (3) comprenant une face extrados qui est crénelée, sur une partie au moins de sa longueur, de préférence sous forme d'une pluralité de premières rainures périphériques circulaires parallèles (3d), ladite deuxième partie annulaire (3b) de la dite bague de compression prolongeant la dite première partie annulaire (3a), ladite deuxième partie annulaire (3b) étant appliquée contre une partie de la dite deuxième partie (2b) de la couche (2) en acier allié résistant à la corrosion non recouverte dudit revêtement en matière plastique (1) et s'étendant sur une longueur L5 inférieure à L3, depuis et contre l'extrémité (1b) dudit revêtement en matière plastique (1) jusqu'à la dite extrémité libre (3c) de la dite bague de compression la plus proche de l'extrémité à souder (10b) de l'élément de conduite (10), et
e) l'assemblage par soudage (11) directement entre elles des extrémités à souder (10b) de deux éléments de conduites (10-1, 10-2) par une soudure en acier allié résistant à la corrosion.

2. Procédé selon la revendication 1, dans lequel la dite bague de compression (3) comprend une dite deuxième partie annulaire (3b) dont la surface intrados est de forme conique reliant la surface intrados de la première partie annulaire (3a) et la surface de la deuxième partie (2b) de la couche (2) en acier allié résistant à la corrosion non recouverte dudit revêtement en matière plastique (1), à l'extrémité (3c) de la dite deuxième partie annulaire (3b) de la bague de compression la plus proche de l'extrémité (10b) de l'élément de conduite (10).

3. Procédé selon la revendication 2, dans lequel ladite deuxième partie annulaire (3b) de la bague de compression, de préférence de forme conique, s'étend contre ladite partie terminale (2b) de la couche (2) en acier allié résistant à la corrosion sur une longueur L5 d'environ 1/2 de L3 la longueur de partie terminale (2b) de la couche (2) en acier allié résistant à la corrosion non recouverte dudit revêtement en matière plastique (1).

4. Procédé selon l'une des revendications 1 à 3, dans lequel, à l'étape b), on réalise un usinage de manière à créer un crénelage, de préférence sous forme d'une pluralité de deuxièmes rainures périphériques circulaires parallèles (2d), sur la première partie (2a) de la face intrados de la couche (2) en acier allié résistant à la corrosion destinée à être recouverte d'une partie terminale (1a) du dit revêtement de protection en matière plastique (1).

5. Procédé selon l'une des revendications 1 à 4, dans lequel, à l'étape c), l'extrémité (1b) dudit revêtement de protection en matière plastique (1) se termine à une distance L3 de l'extrémité (10b) à souder de chaque élément de conduite (10-1, 10-2), L3 étant au moins égale à 1/3, de préférence au moins 1/2 de la longueur L1 de la dite couche (2) en acier allié résistant à la corrosion.

6. Procédé selon l'une quelconque des revendications 1 à 5, à l'étape a), la couche (2) en acier allié résistant à la corrosion sur la partie terminale (10a1) de la paroi interne (10a) de chaque élément de conduite (10-1, 10-2) s'étend sur une longueur L1 de 1/2 à 2 fois le diamètre interne D1 de l'élément de conduite avant usinage et/ou de 4 à 20 fois l'épaisseur de l'élément de conduite avant usinage, de préférence L1 étant sensiblement égal à D1.

7. Procédé selon la revendication 2, dans lequel la dite bague de compression (3) comprend au moins une première partie annulaire (3a) dont la face extrados est crénelée sur une longueur d3 sensiblement égale à et en vis-à-vis d'une longueur d2 de la partie crénelée de la première partie (2a) de la couche (2) en acier allié résistant à la corrosion, lesdites premières et deuxièmes rainures périphériques circulaires parallèles (2d, 3d) étant de profondeur de 1 à 1,5 mm, s'étendant sur une longueur (d2, d3) de 1/5 à 1/2 de la longueur L1 de la dite couche (2) en acier allié résistant à la corrosion, de préférence de 1/4 à 1/3 de L1 et avec une distance de 4 à 6mm entre les dites premières rainures circulaires (3d) et respectivement entre les dites deuxièmes rainures circulaires (2d).

8. Procédé selon l'une quelconque des revendications 1 à 7, dans lequel :
- avant l'étape a), on réalise un usinage préalable de l'alésage de ladite partie terminale (10a1) de longueur L1 de la paroi interne (10a) de chaque élément de conduite, sur une profondeur destinée à recevoir la dite couche (2) en acier allié résistant à la corrosion de 1 à 5 mm, de préférence 3 mm, et
- à l'étape b), on réalise un usinage en surface intrados de la couche (2) en acier allié résistant à la corrosion au diamètre interne de la conduite avant le dit usinage préalable.

9. Procédé selon l'une quelconque des revendications 1 à 8, dans lequel avant l'étape e), on réalise en outre un usinage de finition de l'extrémité de la conduite pour former un chanfrein (10c) permettant de recevoir un cordon de soudure (11) lors de l' étape e) d'assemblage bout à bout par soudage.

10. Procédé selon l'une quelconque des revendications 1 à 9, dans lequel :
1) on prépare des éléments de conduites à souder entre eux en réalisant les étapes a) à d), et
2) on réalise l'étape e) d'assemblage par soudage avec un acier allié résistant à la corrosion des extrémités à souder (10b) respectives d'au moins 2 éléments de conduite obtenus selon l'étape 1) ci-dessus, de préférence en mer à partir d'un navire de pose.

11. Elément de conduite en acier comprenant:
- une couche (2) en acier allié résistant à la corrosion sur une partie terminale (10a1) de longueur L1 de la paroi interne (10a) dudit élément de conduite (10, 10-1, 10-2) depuis une extrémité à souder (10b);
- un revêtement de protection en matière plastique (1), de préférence sous forme d'enveloppe tubulaire, appliqué directement sur la paroi interne (10a) dudit élément de conduite (10-1, 10-2); et recouvrant une première partie (2a) de longueur L2 de la dite couche (2) en acier allié résistant à la corrosion, une deuxième partie (2b) de longueur L3 de la dite couche (2) en acier allié résistant à la corrosion du côté de la dite extrémité (10b) à souder dudit élément de conduite n'étant pas recouverte de dit revêtement de protection en matière plastique (1),
- une bague de compression (3) en acier allié résistant à la corrosion insérée à l'intérieur de l'élément de conduite (10) comprenant
(a) une première partie annulaire (3a) de longueur L4 comprenant une face extrados qui est crénelée, sur une partie au moins de sa longueur L4, de préférence sous forme d'une pluralité de premières rainures périphériques circulaires parallèles (3d), la dite première partie annulaire (3a) étant sertie contre la face intrados d'au moins une partie terminale (1a) dudit revêtement de protection en matière plastique (1) recouvrant ladite première partie (2a) de la dite couche (2) en acier allié résistant à la corrosion, et
(b) une deuxième partie annulaire (3b) de longueur L5 inférieure à L3, prolongeant la dite première partie annulaire (3a), appliquée contre une partie de la dite deuxième partie (2b) de la couche (2) en acier allié résistant à la corrosion non recouverte dudit revêtement en matière plastique (1), la dite deuxième partie annulaire (3b) de la dite bague de compression s'étendant depuis et contre l'extrémité (1b) dudit revêtement en matière plastique (1) jusqu'à ladite extrémité libre (3c) de la dite bague de compression la plus proche de l'extrémité à souder (10b) de l'élément de conduite (10), soudée (4) contre ladite deuxième partie (2b) de la dite couche (2) en acier allié résistant à la corrosion non recouverte dudit revêtement de protection en matière plastique (1).

12. Elément de conduite selon la revendication 11 dans lequel,
- une première partie (2a) de la face intrados de la couche (2) en acier allié résistant à la corrosion destinée à être recouverte d'une partie terminale (1a) du dit revêtement de protection en matière plastique (1), est usinée en crénelage en partie au moins, de préférence sous forme d'une pluralité de dites deuxièmes rainures périphériques circulaires parallèles (2d), et
- la dite bague de compression (3) comprend au moins :
(a) une première partie annulaire (3a) dont la face extrados est en partie au moins crénelée, de préférence sous forme d'une pluralité de dites premières rainures périphériques circulaires parallèles (3d), apte à recouvrir la dite partie terminale (1a) du dit revêtement de protection en matière plastique (1), au droit au moins de la partie crénelée de la première partie (2a) de la couche (2) en acier allié résistant à la corrosion dont la face intrados est recouverte de la partie terminale (1a) du dit revêtement de protection en matière plastique (1), ladite première partie annulaire (3a) s'étendant au droit de la deuxième partie de la couche (2) en acier allié résistant à la corrosion non recouverte par ledit revêtement en matière plastique (1), et
(b) une dite deuxième partie annulaire (3b) dont la surface intrados est de forme conique reliant la surface intrados de la première partie annulaire (3a) et la surface de la deuxième partie (2b) de la couche (2) en acier allié résistant à la corrosion non recouverte dudit revêtement en matière plastique (1), à l'extrémité (3c) de la dite deuxième partie annulaire (3b) de la bague de compression soudée (4) contre ladite deuxième partie (2b) de la dite couche (2) en acier allié résistant à la corrosion non recouverte dudit revêtement de protection en matière plastique (1).

13. Elément de conduite hybride selon la revendication 11 ou 12 dans lequel l'autre extrémité (10d) dudit élément de conduite hybride qui n'est pas destinée à être soudée dans la dite étape 2), ne comprend pas de dite bague de compression mais comprend un manchon tubulaire de jonction (5) rigide en matériau thermoplastique, une première extrémité longitudinale (5a) du dit manchon étant en contact étanche ou venant de matière en continuité avec l'autre extrémité (1c) du dit revêtement en matière plastique (1) à l'intérieur du dit élément de conduite hybride (10-2), une deuxième extrémité (5b) du dit manchon (5) dépassant d'une longueur L0 en dehors de l'autre extrémité (10d) du dit élément de conduite hybride (10-2).

14. Elément de conduite hybride selon la revendication 13 dans lequel, ladite deuxième extrémité (5b) du dit manchon dépassant en dehors de l'autre extrémité (10d) du dit élément de conduite hybride (10-2) est insérée à l'intérieur d'un autre élément de conduite (10-3) en contact étanche, de préférence par électrofusion, avec l'extrémité (1'a) d'un revêtement en matière plastique (1') en retrait d'une longueur L0 à l'intérieur dudit autre élément de conduite (10-3) par rapport à l'extrémité (10e) dudit autre élément de conduite (10-3) assemblée par soudage en acier allié (11') avec ledit élément de conduite hybride (10-2).

15. Conduite sous-marine en acier apte à véhiculer un fluide corrosif, notamment de l'eau, dont la paroi interne est partiellement chemisée par un revêtement de protection en matière plastique de type liner (1) dans lequel on assure l'assemblage par soudage (11) directement entre elles des dites extrémités (10b) à souder d'au moins deux éléments de conduites (10, 10-1, 10-2) comprenant une dite bague de compression du côté de la dite extrémité à souder selon l'une des revendications 11 à 14.

## Patentansprüche

1. Verfahren zur Herstellung einer Unterwasserleitung aus Stahl, die geeignet ist, korrosive Fluide, insbesondere Wasser, zu führen, und deren Innenwand zum Teil mit einer Schutzbeschichtung aus Kunststoffmaterial vom Typ eines Futterrohrs (1) verkleidet ist, wobei der Zusammenbau durch Schweißen (11) direkt zwischen den Enden (10b) von zumindest zwei Leitungselementen (10, 10-1, 10-2) sichergestellt wird, umfassend die Schritte, in welchen der Reihe nach ausgeführt wird:
a) das Aufbringen, vorzugsweise durch Schweißen, einer Schicht (2) aus korrosionsbeständigem legiertem Stahl auf einen Endabschnitt (10a1) der Innenwand (10a) eines jeden Leitungselements (10, 10-1, 10-2) mit der Länge L1 ausgehend von seinem zu verschweißenden Ende (10b),
b) das maschinelle Bearbeiten der inneren Wölbungsoberfläche der Schicht (2) aus korrosionsbeständigem legiertem Stahl,
c) das Aufbringen einer Schutzbeschichtung aus Kunststoffmaterial (1), vorzugsweise in Form einer rohrförmigen Verkleidung, direkt auf der Innenwand (10a) eines jeden Leitungselements (10-1, 10-2), wobei es einen ersten Abschnitt (2a) der Schicht (2) aus korrosionsbeständigem legiertem Stahl mit der Länge L2 bedeckt, und ein benachbarter zweiter Abschnitt (2b) der Schicht (2) aus korrosionsbeständigem legiertem Stahl mit der Länge L3 auf der Seite des zu verschweißenden Endes (10b) eines jeden Leitungselements nicht von der Schutzbeschichtung aus Kunststoffmaterial (1) bedeckt ist,
d) das Einführen eines Druckrings (3) aus korrosionsbeständigem legiertem Stahl in das Innere des Endabschnitts (10a1) eines jeden Leitungselements (10) auf koaxiale Weise (XX') und die Verpressung eines ersten ringförmigen Abschnitts (3a) des Druckrings mit der Länge L4 gegen die innere Wölbungsseite des Endabschnitts (1a) der Schutzbeschichtung aus Kunststoffmaterial (1), der einen ersten Abschnitt (2a) der Schicht (2) aus korrosionsbeständigem legiertem Stahl bedeckt, und die Anschweißung (4) des freien Endes (3c) eines zweiten ringförmigen Abschnitts (3b) des Druckrings gegen einen zweiten Abschnitt (2b) der Schicht (2) aus korrosionsbeständigem legiertem Stahl, der nicht mit der Schutzbeschichtung aus Kunststoffmaterial (1) bedeckt ist, wobei der erste ringförmige Abschnitt (3a) des Druckrings (3) eine äußere Wölbungsseite umfasst, die zumindest über einen Abschnitt ihrer Länge gezahnt ist, vorzugsweise in Form einer Vielzahl von ersten umlaufenden, kreisförmigen, parallelen Rillen (3d), wobei der zweite ringförmige Abschnitt (3b) des Druckrings den ersten ringförmigen Abschnitt (3a) verlängert, wobei der zweite ringförmige Abschnitt (3b) gegen einen Abschnitt des zweiten Abschnitts (2b) der Schicht (2) aus korrosionsbeständigem legiertem Stahl aufgebracht wird, der nicht von der Beschichtung aus Kunststoffmaterial (1) bedeckt ist und sich von dem Ende (1b) der Beschichtung aus Kunststoffmaterial (1) ausgehend und gegen dieses bis zu dem freien Ende (3c) des Druckrings, das dem zu verschweißenden Ende (10b) des Leitungselements (10) am nächsten liegt, über eine Länge L5 kleiner als L3 erstreckt, und
e) das Zusammenfügen durch Schweißen (11) direkt zwischen den zu verschweißenden Enden (10b) von zwei Leitungselementen (10-1, 10-2) durch eine Schweißung aus korrosionsbeständigem legiertem Stahl.

2. Verfahren nach Anspruch 1, wobei der Druckring (3) einen zweiten ringförmigen Abschnitt (3b) umfasst, dessen innere Wölbungsoberfläche eine konische Form aufweist, welche die innere Wölbungsoberfläche des ersten ringförmigen Abschnitts (3a) und die Oberfläche des zweiten Abschnitts (2b) der Schicht (2) aus korrosionsbeständigem legiertem Stahl, der nicht mit der Beschichtung aus Kunststoffmaterial (1) bedeckt ist, mit dem Ende (3c) des zweiten ringförmigen Abschnitts (3b) des Druckrings verbindet, der dem Ende (10b) des Leitungselements (10) am nächsten liegt.

3. Verfahren nach Anspruch 2, wobei der zweite ringförmige Abschnitt (3b) des Druckrings sich, vorzugsweise in konischer Form, gegen den Endabschnitt (2b) der Schicht (2) aus korrosionsbeständigem legiertem Stahl über eine Länge L5 von ungefähr 1/2 der Länge L3 des Endabschnitts (2b) der Schicht (2) aus korrosionsbeständigem legiertem Stahl erstreckt, der nicht mit der Beschichtung aus Kunststoffmaterial (1) bedeckt ist.

4. Verfahren nach einem der Ansprüche 1 bis 3, wobei in Schritt b) eine solche maschinelle Bearbeitung erfolgt, dass eine Zahnung vorzugsweise in Form einer Vielzahl von zweiten umlaufenden, kreisförmigen, parallelen Rillen (2d) auf dem ersten Abschnitt (2a) der inneren Wölbungsseite der Schicht (2) aus korrosionsbeständigem legiertem Stahl erzeugt wird, der dazu bestimmt ist, von einem Endabschnitt (1a) der Schutzbeschichtung aus Kunststoffmaterial (1) bedeckt zu werden.

5. Verfahren nach einem der Ansprüche 1 bis 4, wobei in Schritt c) das Ende (1b) der Schutzbeschichtung aus Kunststoffmaterial (1) in einem Abstand L3 von dem zu verschweißenden Ende (10b) eines jeden Leitungselements (10-1, 10-2) endet, wobei L3 zumindest gleich 1/3, vorzugsweise zumindest 1/2 der Länge L1 der Schicht (2) aus korrosionsbeständigem legiertem Stahl ist.

6. Verfahren nach einem der Ansprüche 1 bis 5, wobei in Schritt a) die Schicht (2) aus korrosionsbeständigem legiertem Stahl auf dem Endabschnitt (10a1) der Innenwand (10a) eines jeden Leitungselements (10-1, 10-2) sich über eine Länge L1 von ½- bis 2-mal dem Innendurchmesser D1 des Leitungselements vor der maschinellen Bearbeitung und/oder von 4- bis 20-mal der Dicke des Leitungselements vor der maschinellen Bearbeitung erstreckt, wobei L1 vorzugsweise im Wesentlichen gleich D1 ist.

7. Verfahren nach Anspruch 2, wobei der Druckring (3) zumindest einen ersten ringförmigen Abschnitt (3a) umfasst, dessen äußere Wölbungsseite über eine Länge d3, die im Wesentlichen gleich einer Länge d2 des gezahnten Abschnitts des ersten Abschnitts (2a) der Schicht (2) aus korrosionsbeständigem legiertem Stahl ist und dieser gegenüberliegt, gezahnt ist, wobei die ersten und zweiten umlaufenden, kreisförmigen, parallelen Rillen (2d, 3d) eine Tiefe von 1 bis 1,5 mm aufweisen, und sich über eine Länge (d2, d3) von 1/5 bis 1/2 der Länge L1 der Schicht (2) aus korrosionsbeständigem legiertem Stahl erstrecken, vorzugsweise von 1/4 bis 1/3 von L1 und mit einem Abstand von 4 bis 6 mm zwischen den ersten kreisförmigen Rillen (3d) und jeweils zwischen den zweiten kreisförmigen Rillen (2d).

8. Verfahren nach einem der Ansprüche 1 bis 7, wobei:
- vor dem Schritt a) eine maschinelle Vorbearbeitung der Bohrung des Endabschnitts (10a1) mit der Länge L1 der Innenwand (10a) eines jeden Leitungselements auf eine vorgesehene Tiefe erfolgt, um die Schicht (2) aus korrosionsbeständigem legiertem Stahl von 1 bis 5 mm, vorzugsweise 3 mm, aufzunehmen, und
- in Schritt b) eine maschinelle Bearbeitung an der inneren Wölbungsoberfläche der Schicht (2) aus korrosionsbeständigem legiertem Stahl auf den Innendurchmesser der Leitung vor der maschinellen Vorbearbeitung erfolgt.

9. Verfahren nach einem der Ansprüche 1 bis 8, wobei vor Schritt e) ferner eine maschinelle Endbearbeitung des Endes der Leitung erfolgt, um eine Abfasung (10c) zu bilden, die es erlaubt, in dem Schritt e) des Zusammenbauens durch Schweißen Stoß an Stoß eine Schweißnaht (11) aufzunehmen.

10. Verfahren nach einem der Ansprüche 1 bis 9, wobei:
1) die Leitungselemente, die miteinander verschweißt werden sollen, vorbereitet werden, indem die Schritte a) bis d) ausgeführt werden, und
2) der Schritt e) des Zusammenfügens durch Schweißen von jeweiligen zu verschweißenden Enden (10b) von zumindest 2 Leitungselementen, die gemäß dem vorstehenden Schritt 1) erhalten werden, mit einem korrosionsbeständigen legierten Stahl erfolgt, vorzugsweise auf See von einem Verlegungsschiff aus.

11. Leitungselement aus Stahl, umfassend:
- eine Schicht (2) aus korrosionsbeständigem legiertem Stahl auf einem Endabschnitt (10a1) der Innenwand (10a) des Leitungselements (10, 10-1, 10-2) mit der Länge L1 ausgehend von einem zu verschweißenden Ende (10b),
- eine Schutzbeschichtung aus Kunststoffmaterial (1), vorzugsweise in Form einer rohrförmigen Verkleidung, die direkt auf der Innenwand (10a) des Leitungselements (10-1, 10-2) aufgebracht wird, und die einen ersten Abschnitt (2a) der Schicht (2) aus korrosionsbeständigem legiertem Stahl mit der Länge L2 bedeckt, und wobei ein zweiter Abschnitt (2b) der Schicht (2) aus korrosionsbeständigem legiertem Stahl mit der Länge L3 auf der Seite des zu verschweißenden Endes (10b) des Leitungselements nicht von der Schutzbeschichtung aus Kunststoffmaterial (1) bedeckt ist,
- einen Druckring (3) aus korrosionsbeständigem legiertem Stahl, der in das Innere des Leitungselements (10) eingeführt ist und umfasst
(a) einen ersten ringförmigen Abschnitt (3a) mit der Länge L4, der eine äußere Wölbungsseite umfasst, die zumindest über einen Abschnitt ihrer Länge L4 gezahnt ist, vorzugsweise in Form einer Vielzahl von ersten umlaufenden, kreisförmigen, parallelen Rillen (3d), wobei der erste ringförmige Abschnitt (3a) gegen die innere Wölbungsseite von zumindest einem Endabschnitt (1a) der Schutzbeschichtung aus Kunststoffmaterial (1), der den ersten Abschnitt (2a) der Schicht (2) aus korrosionsbeständigem legiertem Stahl bedeckt, verpresst ist, und
(b) einen zweiten ringförmigen Abschnitt (3b) mit der Länge L5 kleiner als L3, der den ersten ringförmigen Abschnitt (3a) verlängert und gegen einen Abschnitt des zweiten Abschnitts (2b) der Schicht (2) aus korrosionsbeständigem legiertem Stahl, der nicht mit der Beschichtung aus Kunststoffmaterial (1) bedeckt ist, aufgebracht ist, wobei der zweite ringförmige Abschnitt (3b) des Druckrings sich von dem Ende (1b) der Beschichtung aus Kunststoffmaterial (1) ausgehend und gegen dieses bis zu dem freien Ende (3c) des Druckrings erstreckt, das dem zu verschweißenden Ende (10b) des Leitungselements (10) am nächsten liegt, und an den zweiten Abschnitt (2b) der Schicht (2) aus korrosionsbeständigem legiertem Stahl, der nicht mit der Schutzbeschichtung aus Kunststoffmaterial (1) bedeckt ist, angeschweißt (4) ist.

12. Leitungselement nach Anspruch 11, wobei
- ein erster Abschnitt (2a) der inneren Wölbungsseite der Schicht (2) aus korrosionsbeständigem legiertem Stahl, der dazu bestimmt ist, von einem Endabschnitt (1a) der Schutzbeschichtung aus Kunststoffmaterial (1) bedeckt zu werden, maschinell bearbeitet ist, so dass er zumindest zum Teil vorzugsweise in Form einer Vielzahl von zweiten umlaufenden, kreisförmigen, parallelen Rillen (2d) gezahnt ist, und
- der Druckring (3) zumindest umfasst:
(a) einen ersten ringförmigen Abschnitt (3a), dessen äußere Wölbungsseite zumindest zum Teil vorzugsweise in Form einer Vielzahl von ersten umlaufenden, kreisförmigen, parallelen Rillen (3d) gezahnt und dazu geeignet ist, den Endabschnitt (1a) der Schutzbeschichtung aus Kunststoffmaterial (1) zu bedecken, zumindest über den gezahnten Abschnitt des ersten Abschnitts (2a) der Schicht (2) aus korrosionsbeständigem legiertem Stahl, dessen innere Wölbungsseite von dem Endabschnitt (1a) der Schutzbeschichtung aus Kunststoffmaterial (1) bedeckt ist, wobei der erste ringförmige Abschnitt (3a) sich über den zweiten Abschnitt der Schicht (2) aus korrosionsbeständigem legiertem Stahl erstreckt, der nicht von der Beschichtung aus Kunststoffmaterial (1) bedeckt ist, und
(b) einen zweiten ringförmigen Abschnitt (3b), dessen innere Wölbungsoberfläche eine konische Form aufweist, welche die innere Wölbungsoberfläche des ersten ringförmigen Abschnitts (3a) und die Oberfläche des zweiten Abschnitts (2b) der Schicht (2) aus korrosionsbeständigem legiertem Stahl, der nicht mit der Beschichtung aus Kunststoffmaterial (1) bedeckt ist, mit dem Ende (3c) des zweiten ringförmigen Abschnitts (3b) des Druckrings verbindet, der an den zweiten Abschnitt (2b) der Schicht (2) aus korrosionsbeständigem legiertem Stahl angeschweißt (4) ist, der nicht von der Schutzbeschichtung aus Kunststoffmaterial (1) bedeckt ist.

13. Hybrides Leitungselement nach Anspruch 11 oder 12, wobei das andere Ende (10d) des hybriden Leitungselements, das nicht dazu bestimmt ist, in dem Schritt 2) verschweißt zu werden, den Druckring nicht umfasst, sondern eine rohrförmige starre Verbindungsmuffe (5) aus thermoplastischem Material umfasst, wobei ein erstes Längsende (5a) der Muffe in dichtem Kontakt mit dem anderen Ende (1c) der Beschichtung aus Kunststoffmaterial (1) im Inneren des hybriden Leitungselements (10-2) steht oder dieses einstückig und materialeinheitlich fortsetzt, wobei ein zweites Ende (5b) der Muffe (5) mit einer Länge L0 über das andere Ende (10d) des hybriden Leitungselements (10-2) hinausragt.

14. Hybrides Leitungselement nach Anspruch 13, wobei das zweite Ende (5b) der Muffe, das über das andere Ende (10d) des hybriden Leitungselements (10-2) hinausragt, vorzugsweise durch Heizwendelschweißen in das Innere eines weiteren Leitungselements (10-3) eingeführt ist, in dichtem Kontakt mit dem Ende (1'a) einer Beschichtung aus Kunststoffmaterial (1'), die um eine Länge L0 im Inneren des weiteren Leitungselements (10-3) in Bezug auf das Ende (10e) des weiteren Leitungselements (10-3), das durch Verschweißen mit legiertem Stahl (11') mit dem hybriden Leitungselement (10-2) verbaut wird, zurückversetzt ist.

15. Unterwasserleitung aus Stahl, die dazu geeignet ist, ein korrosives Fluid, insbesondere Wasser, zu führen, und deren Innenwand zum Teil mit einer Schutzbeschichtung aus Kunststoffmaterial vom Typ eines Futterrohrs (1) verkleidet ist, wobei der Zusammenbau durch Schweißen (11) direkt zwischen den zu verschweißenden Enden (10b) von zumindest zwei Leitungselementen (10, 10-1, 10-2) sichergestellt wird, die einen Druckring auf der Seite des zu verschweißenden Endes umfassen, nach einem der Ansprüche 11 bis 14.

## Claims

1. A method for producing a steel underwater pipe that is able to carry corrosive fluids, particularly water, the internal wall of which is partially lined by a protective coating of plastic material of the liner type (1) wherein the assembly by welding (11) directly together the ends (10b) of at least two pipe elements (10, 10-1, 10-2) is provided for, comprising the steps wherein are produced successively:
a) the application, preferably by welding, of a layer (2) of corrosion-resistant steel alloy on a terminal part (10a1) of length L1 of the internal wall (10a) of each pipe element (10, 10-1, 10-2) from its end to be welded (10b);
b) the machining on the pressure side surface of the layer (2) of corrosion-resistant steel alloy,
c) the application of a said protective coating of plastic material (1), preferably in the form of a tubular shell, directly on the internal wall (10a) of each pipe element (10-1, 10-2); and covering a first part (2a) of length L2 of said layer (2) of corrosion-resistant steel alloy, a second, adjacent part (2b) of length L3 of said layer (2) of corrosion-resistant steel alloy on the side of the end (10b) to be welded of each pipe element not being covered by said protective coating of plastic material (1),
d) the coaxial (XX') insertion of a compression ring (3) of corrosion-resistant steel alloy inside said terminal part (10a1) of each pipe element (10) and the crimping of a first annular part (3a) of length L4 of said compression ring against the pressure side face of the terminal part (1a) of said protective coating of plastic material (1) covering a first part (2a) of said layer (2) of corrosion-resistant steel alloy, and the welding (4) of the free end (3c) of a second annular part (3b) of said compression ring against a second part (2b) of said layer (2) of corrosion-resistant steel alloy not covered by said protective coating of plastic material (1), said first annular part (3a) of the compression ring (3) comprising an outer side face which is corrugated, over a part at least of its length, preferably in the form of a plurality of first parallel circular peripheral grooves (3d), said second annular part (3b) of said compression ring continuing said first annular part (3a), said second annular part (3b) being applied against a part of said second part (2b) of the layer (2) of corrosion-resistant steel alloy not covered by said coating of plastic material (1) and extending over a length L5 less than L3, from and against the end (1b) of said coating of plastic material (1) until said free end (3c) of said compression ring closest to the end to be welded (10b) of the pipe element (10), and
e) the assembly by welding (11) directly together the ends to be welded (10b) of two pipe elements (10-1, 10-2) by a corrosion-resistant steel alloy weld.

2. The method according to claim 1, wherein said compression ring (3) comprises a said second annular part (3b) the pressure side surface of which is of conical shape, connecting the pressure side surface of the first annular part (3a) and the surface of the second part (2b) of the layer (2) of corrosion-resistant steel alloy not covered by said coating of plastic material (1), at the end (3c) of said second annular part (3b) of the compression ring closest to the end (10b) of the pipe element (10).

3. The method according to claim 2, wherein said second annular part (3b) of the compression ring, preferably of conical shape, extends against said terminal part (2b) of the layer (2) of corrosion-resistant steel alloy over a length L5 of approximately 1/2 of L3, the length of the terminal part (2b) of the layer (2) of corrosion-resistant steel alloy not covered by said coating of plastic material (1).

4. The method according to one of claims 1 to 3, wherein, in step b), machining is carried out so as to create a corrugation, preferably in the form of a plurality of second parallel circular peripheral grooves (2d) on the first part (2a) of the pressure side face of the layer (2) of corrosion-resistant steel alloy intended to be covered by a terminal part (1a) of said protective coating of plastic material (1).

5. The method according to one of claims 1 to 4, wherein, in step c), the end (1b) of said protective coating of plastic material (1) is terminated at a distance L3 from the end (10b) to be welded of each pipe element (10-1, 10-2), L3 being at least equal to 1/3, preferably at least 1/2 of the length L1 of said layer (2) of corrosion-resistant steel alloy.

6. The method according to any one of claims 1 to 5, in step a), the layer (2) of corrosion-resistant steel alloy on the terminal part (10a1) of the internal wall (10a) of each pipe element (10-1, 10-2) extends over a length L1 of 1/2 to 2 times the inner diameter D1 of the pipe element prior to machining and/or of 4 to 20 times the thickness of the pipe element prior to machining, L1 preferably being substantially equal to D1.

7. The method according to claim 2, wherein said compression ring (3) comprises at least one first annular part (3a), the outer side face of which is corrugated over a length d3 substantially equal to and facing a length d2 of the corrugated part of the first part (2a) of the layer (2) of corrosion-resistant steel alloy, said first and second parallel circular peripheral grooves (2d, 3d) having a depth of 1 to 1.5 mm, extending over a length (d2, d3) of 1/5 to 1/2 of the length L1 of said layer (2) of corrosion-resistant steel alloy, preferably of 1/4 to 1/3 of L1 and with a distance of 4 to 6 mm between said first circular grooves (3d) and respectively between said second circular grooves (2d).

8. The method according to any one of claims 1 to 7, wherein:
- prior to step a), prior machining is carried out of the bore of said terminal part (10a1) of length L1 of the internal wall (10a) of each pipe element, over a depth intended to receive said layer (2) of corrosion-resistant steel alloy of 1 to 5 mm, preferably 3 mm, and
- in step b), machining is carried out on the pressure side surface of the layer (2) of corrosion-resistant steel alloy at the inner diameter of the pipe before said prior machining.

9. The method according to any one of claims 1 to 8, wherein, before step e), finish machining is also carried out of the end of the pipe to form a chamfer (10c) allowing receiving a weld bead (11) during step e) of end-to-end assembly by welding.

10. The method according to any one of claims 1 to 9, wherein:
1) pipe elements are prepared for welding together by carrying out steps a) to d), and
2) step e) of assembly by welding with a corrosion-resistant steel alloy of the respective ends to be welded (10b) of at least 2 pipe elements obtained according to step 1) above is carried out, preferably at sea from a pipelay vessel.

11. A steel pipe element comprising:
- a layer (2) of corrosion-resistant steel alloy on a terminal part (10a1) of length L1 of the internal wall (10a) of said pipe element (10, 10-1, 10-2) from one end to be welded (10b);
- a protective coating of plastic material (1), preferably in the form of a tubular shell, applied directly on the internal wall (10a) of said pipe element (10-1, 10-2); and covering a first part (2a) of length L2 of said layer (2) of corrosion-resistant steel alloy, a second part (2b) of length L3 of said layer (2) of corrosion-resistant steel alloy on the side of said end (10b) to be welded of said pipe element not being covered by said protective coating of plastic material (1),
- a compression ring (3) of corrosion-resistant steel alloy inserted inside the pipe element (10) comprising
(a) a first annular part (3a) of length L4 comprising an outer side face which is corrugated, over a part at least of its length L4, preferably in the form of a plurality of first parallel circular peripheral grooves (3d), said first annular part (3a) being crimped against the pressure side face of at least one terminal part (1a) of said protective coating of plastic material (1) covering said first part (2a) of said layer (2) of corrosion-resistant steel alloy, and
(b) a second annular part (3b) of length L5 less than L3, continuing said first annular part (3a), applied against a part of said second part (2b) of the layer (2) of corrosion-resistant steel alloy not covered by said coating of plastic material (1), said second annular part (3b) of said compression ring extending from and against the end (1b) of said coating of plastic material (1) until said free end (3c) of said compression ring closest to the end to be welded (10b) of the pipe element (10), welded (4) against said second part (2b) of said layer (2) of corrosion-resistant steel alloy not covered by said protective coating of plastic material (1).

12. The pipe element according to claim 11, wherein,
- a first part (2a) of the pressure side face of the layer (2) of corrosion-resistant steel alloy intended to be covered by a terminal part (1a) of said protective coating of plastic material (1) is machined for corrugation, in part at least, preferably in the form of a plurality of said second parallel circular peripheral grooves (2d), and
- said compression ring (3) comprises at least:
(a) one first annular part (3a), the outer side face of which is corrugated in part at least, preferably in the form of a plurality of said parallel circular peripheral grooves (3d), able to cover said terminal part (1a) of said protective coating of plastic material (1), in line with at least the corrugated part of the first part (2a) of the layer (2) of corrosion-resistant steel alloy of which the pressure side face is covered by the terminal part (1a) of said protective coating of plastic material (1), said first annular part (3a) extending in line with the second part of the layer (2) of corrosion-resistant steel alloy not covered by said coating of plastic material (1), and
(b) one said second annular part (3b) the pressure side surface of which is of conical shape connecting the pressure side surface of the first annular part (3a) and the surface of the second part (2b) of the layer (2) of corrosion-resistant steel alloy not covered by said coating of plastic material (1), at the end (3c) of said second annular part (3b) of the compression ring welded (4) against said second part (2b) of said layer (2) of corrosion-resistant steel alloy not covered by said protective coating of plastic material (1).

13. The hybrid pipe element according to claim 11 or 12, wherein the other end (10d) of said hybrid pipe element which is not intended to be welded in said step 2) does not comprise said compression ring but comprises a rigid tubular junction sleeve (5) of thermoplastic material, a first longitudinal end (5a) of said sleeve being in sealed contact or being formed in a continuous piece with the other end (1c) of said coating of plastic material (1) inside said hybrid pipe element (10-2), a second end (5b) of said sleeve (5) protruding by a length L0 outside the other end (10d) of said hybrid pipe element (10-2).

14. The hybrid pipe element according to claim 13, wherein said second end (5b) of said sleeve protruding outside the other end (10d) of said hybrid pipe element (10-2) is inserted inside another pipe element (10-3) in sealed contact, preferably by electric socket welding, with the end (1'a) of a coating of plastic material (1) set back by a length L0 inside said other pipe element (10-3) relative to the end (10e) of said other pipe element (10-3) assembled by steel alloy welding (11') with said hybrid pipe element (10-2).

15. A steel underwater pipe that is able to carry a corrosive fluid, particularly water, of which the internal wall is partially lined by a protective coating of plastic material of the liner type (1), in which the assembly by welding (11) directly together said ends (10b) to be welded of at least two pipe elements (10, 10-1, 10-2) comprising a said compression ring on the side of said end to be welded is provided for according to one of claims 11 to 14.
